# EUROPEAN PATENT APPLICATION

(11) **EP 1 113 434 A2**
(43) Date of publication of application: **04.07.2001**
(21) Application number: 00830863.7
(22) Date of filing: 29.12.2000
(51) Int. Cl.: G11B 20/00, G07F 7/10

(54) **A system used to recognise original products**

(30) Priority: 30.12.1999 IT AN990049
(71) Applicant: Formica, Roberto, 06087 Ponte San Giovanni (PG) (IT)
(72) Inventor: Formica, Roberto, 06087 Ponte San Giovanni (PG) (IT)
(74) Representative: Baldi, Claudio

(57) **Abstract**

The present invention relates to a system used to recognise original products according to which each product is launched on the market with a secret code that was previously registered with the specific product in a computerised memory at the manufacturing company, to which consumers can apply to obtain the confirmation that the code of the product they have purchased is the original manufacturer code.

## Description

The present patent application relates to an interactive system used to recognise original products and certify their original characteristics, based on the direct "dialogue" between final users and manufacturing companies.

The system according to the present invention has been devised in order to solve a problem that has troubled a large number of manufacturers in the last few years, with particular reference to popular articles with famous trademarks and, more recently, to manufacturers of software, compact discs, CD-ROMs, videotapes and similar items.

This is the so-called commercial counterfeiting, which is the illegal reproduction of original products.

More and more often, articles exactly reproducing the aesthetic, constructive and distinctive characteristics of original products that are particularly known and appreciated by consumers are illegally introduced onto the market.

Manufacturers of counterfeited products have achieved such a perfection level that their articles are practically identical to the original ones and therefore very difficult to be identified, not only by consumers, but often by experts in the field, such as original manufacturers, sales agents and dealers.

Today, consumers who intend to purchase original products in good faith have sometimes strong doubts about the originality of the purchased product, which may be an illegal reproduction.

It must be said that counterfeited products are causing extensive damage to "honest" manufacturers, who feel the urgent need to find a technology capable of reducing, if not eliminating, this problem.

The purpose of the present invention is to realise a system capable of providing consumers with the capability of unequivocally ascertaining that the product they have purchased has been produced by the original manufacturer.

The recognition system according to the present invention is based on a specific secret code given to each original article.

The secret code is given by the original manufacturer, who maintains preferably computerised records showing the correspondence between products and codes.

The secret code will physically accompany the product during its introduction on the market. However, during the distribution and the exhibition of the product in the store, the code will remain absolutely secret, since it is exclusively reserved to final consumers.

In order to guarantee absolute secrecy, the code is encrypted in such a way that after the first reading it will become visible, thus preventing it from being encoded again.

As non-restrictive examples, the encryption of the secret code could be similar to the one used for instant lottery tickets (known as "scratch cards"). In this case, the original product will be distributed together with a tag or label with the secret code covered with a layer of removable paint

Alternatively, the same technology used for the secret codes of the cards used to get money from automatic teller machines or credit cards. As it is known, in this case the secret code is printed on a sheet of paper contained in a sealed envelope.

In the system according to the present invention, the purchaser receives the secret code after buying an original product. After that, he can contact the original manufacturer to check the originality of the product.

The dialogue between the customer and the original manufacturer can make use of advanced technologies, as a toll-free number or an Internet site provided by the manufacturer.

In particular, the customer can ask the manufacturer to confirm the correspondence between the product and its secret code.

Through its computerised records the manufacturer can immediately check the correspondence between product and code, thus providing an answer to the customer's enquiry.

If the manufacturer cannot confirm the correspondence between product and secret code or in the presence of a product without secret code on the market, it will be possible to state that the product is counterfeited.

In order to optimise the efficacy and dependability of the recognition system according to the present invention, the computerised memory of the manufacturing company will certify the product authenticity only once. Upon an enquiry asking to confirm a previously certified code, the memory will also inform the consumer that the original product has already been sold. This will avoid "cheating" the identification system according to the present invention.

If the computerised memory of the manufacturing company could recognise the code of a specific product several times, counterfeiters could purchase the original product, read its secret code and introduce an unlimited number of counterfeited copies with the same code onto the market, reproducing the correspondence between product and code designed by the original manufacturer to identify original products.

In view of the above, in order to verify the authenticity of the purchased product, users can enquire the manufacturer's computerised memory in the store, after purchasing and paying for the goods.

In this way, counterfeiters cannot appropriate the secret code of a product purchased by others and use it for a counterfeited product. As a matter of fact, in that case, the enquiry made by the person who has purchased a counterfeited product - being the first enquiry made to the original manufacturer - would give a positive result, thus incorrectly confirming the originality of the purchased product.

The fact that the manufacturer's computerised memory will only respond affirmatively to only one enquiry on the authentic correspondence between code-product will also allow consumers to recognise dealers that sell counterfeited products.

If the purchaser is informed that the code of the product he has purchased is not the original code of the manufacturer, or if the code cannot be identified for the second time, the purchaser will clearly recognise the dealer as a dishonest seller who is trying to pass the counterfeited product off as original ones.

Apart from recognising original products as described above, the interactive system according to the present invention can also be used by the manufacturer to certify the characteristics of its products.

This application will prove particularly useful in view of the fact that counterfeiting sometimes consists in the statement of false characteristics made by dishonest distributors.

In the presence of any doubts on the statement made by the final seller, the purchaser will be able to obtain authentic information from the oriqinal manufacturer.

## Claims

1. A system used to recognise original products according to which each product is launched on the market with a secret code that was previously registered with the specific product in a computerised memory at the manufacturing company, to which consumers can apply to obtain the confirmation that the code of the product they have purchased is the original manufacturer code.

2. A system according to claim 1, characterised by the fact that the code applied on each product is encrypted in such a way that after the first reading the code will become visible, thus preventing it from being encoded again.

3. A system according to claim 1, characterised by the fact that the computerised memory of the manufacturing company can recognise the secret code only once.

4. A system according to claim 1 and 3, characterised by the fact that the computerised memory of the manufacturing company can reply to a person requesting the identification of a previously recognised code, informing him that the original product associated with the code has already been sold.

5. A system according to claim 1, characterised by the fact that the computerised memory of the manufacturing company can also certify the original characteristics of the product, upon request from the final consumer regarding the specific code of each product.
